# EUROPÄISCHE PATENTANMELDUNG

(11) **EP 4 738 657 A1**
(43) Veröffentlichungstag der Anmeldung: **06.05.2026**
(21) Anmeldenummer: 25210414.6
(22) Anmeldetag: 22.10.2025
(51) Int. Cl.: H02K 1/276, H02K 1/28, H02K 7/00

(54) **ROTOR EINER ELEKTRISCHEN MASCHINE, SOWIE ELEKTRISCHE MASCHINE AUFWEISEND EINEN SOLCHEN ROTOR**

(30) Priorität: 04.11.2024 DE 102024210572
(71) Anmelder: Robert Bosch GmbH, 70442 Stuttgart (DE)
(72) Erfinder: Szasz, Daniel, 1103 Budapest (HU); Bodo, Lajos, 4150 Püspökladany (HU)

(57) **Zusammenfassung**

Die vorliegende Erfindung betrifft einen Rotor (10) für eine elektrische Maschine (12), sowie eine elektrische Maschine (12), mit einem Grundkörper (18), der sich konzentrisch um eine axiale Rotorwelle (14) erstreckt, wobei der Grundkörper (18) aus unterschiedlichen, axial gestapelten Blechlamellen (20) zusammensetzt ist, wobei ein erster Lamellen-Typ (21) an seiner radialen Innenseite Klemmelemente und/oder Zentrierelemente zur Befestigung auf der Rotorwelle (14) aufweist, und ein zweiter Lamellen-Typ (22) radial innen eine axiale Abstütz-Struktur aufweist, die radial beabstandet zur Rotorwelle (14) ausgebildet ist und axial zwischen ersten Lamellen-Typen (21) angeordnet ist, um diese im radial inneren Bereich in Axialrichtung (8) gegeneinander abzustützen.

## Beschreibung

Die Erfindung betrifft einen Rotor einer elektrischen Maschine, sowie eine elektrische Maschine aufweisend einen solchen Rotor nach der Gattung der unabhängigen Ansprüche.

### Stand der Technik

Aus der DE 10 2010 061 778A1 ist ein Elektromotor mit einem ein Lamellenpaket aufweisenden Rotor bekannt geworden, wobei Magnete in Aussparungen im Lamellenpaket angeordnet sind. Die Magnete sind in Radialrichtung länger ausgebildet als in Tangentialrichtung und werden mit federnden Laschen in der Aussparung gehalten. Der Rotorgrundkörper ist aus zwei Lamellentypen zusammengesetzt, wobei ein Lamellentyp die Magnete mittels der Federlaschen in den Aussparungen hält, und der andere Lamellentyp für die Verbindung des Lamellenpakets mit der Rotorwelle ausgebildet ist. Bei dieser Ausführung wird das Lamellenpaket beispielsweise mit einem angespritzten Kunststoff mit der Rotorwelle verbunden, um den magnetischen Fluss zur Rotorwelle aus Metall zu verhindern. Eine solche Ausführung, bei der die einzelnen Blechlamellen mittels eingespritztem Kunststoff mit der Rotorwelle verbunden werden, ist jedoch sehr aufwändig.

### Offenbarung der Erfindung

Der erfindungsgemäße Rotor und die elektrische Maschine mit den Merkmalen der unabhängigen Ansprüche haben demgegenüber den Vorteil, dass durch das Anformen von axialen Stützelementen an den Lamellentypen, die die Permanentmagnete festklemmen, verhindert werden kann, dass die einzelnen Blechlamellen beim Aufpressen auf die Rotorwelle gegeneinander verkippen. Dadurch, dass die axialen Stützelemente des zweiten Lamellentyps im radialen Bereich der Klemm- oder Zentrierelemente der Blechlamellen ersten Typs axial an den Klemmelementen und Zentrierelementen des ersten Lamellentyps einliegen, sind diese einer wesentlich geringeren Biegebelastung ausgesetzt, wodurch alle Blechlamellen flächig axial aneinander anliegen. Dadurch werden die Verbindungselemente - beispielsweise die Stanzpaketierungen oder Klebemitteln - zwischen den Blechlamellen nicht aufgebrochen, wodurch alle Blechlamellen definiert auf der Ankerwelle positioniert bleiben.

Durch die in den abhängigen Ansprüchen aufgeführten Maßnahmen sind vorteilhafte Weiterbildungen und Verbesserungen der in den unabhängigen Ansprüchen vorgegebenen Ausführungen möglich. So ist es besonders vorteilhaft, wenn die zweiten Lamellentypen, die die Magnete in den Magnettaschen fixieren, keine Klemmelemente oder Zentrierelemente aufweisen, die an der Rotorwelle anliegen. Am Umfangsrand der Magnettaschen sind beim zweiten Lamellentyp monolithisch Fixierelemente angeformt, die die Permanentmagnete in die Magnettaschen pressen. Der radial innere Bereich des zweiten Lamellentyps, an dem keine Zentrierelemente oder Klemmelemente angeformt sind, liegt nun durch die an dieser Stelle angeformte axiale Abstützt-Struktur axial an den benachbarten Klemm- und/oder Zentrierelementen an, um diese bei der Montage auf die Rotorwelle axial abzustützen.

Bevorzugt sind die Magnettaschen zumindest am zweiten Lamellentyp radial außen mittels einer Umfangswand geschlossen ausgebildet, sodass das Fixierelement den Permanentmagnet an dessen radialer Innenseite radial nach außen gegen die Umfangswand presst, um den Permanentmagneten zuverlässig in der Magnettasche zu fixieren. Das Fixierelement ist dabei besonders günstig als gebogene Haltenase ausgebildet, die radial federnd an der Innenseite des Permanentmagneten anliegt. Das Fixierelement wird beim Ausstanzen des zweiten Lamellentyps mit ausgeformt, und ist bevorzugt am radial inneren Bereich des Polbereichs angeformt, und erstreckt sich in Umfangsrichtung zum Permanentmagneten hin.

Als Abstützt-Struktur des zweiten Lamellentyps erstrecken sich besonders günstig radiale Stützstege von den Polbereichen zur Rotorwelle hin, ohne jedoch an der Rotorwelle anzuliegen. Die radialen Stützstege werden ebenfalls bei der Herstellung des zweiten Lamellentyps mit ausgestanzt und sind bezüglich der Umfangsrichtung bevorzugt in einer radialen Linie mit den Klemmelementen und den Zentrierelemente des ersten Lamellentyps angeordnet.

In einer ersten Ausführung enden die radialen Stützstege stabförmig mit einem freien Ende. Dieses stabförmigen Stützstege werden dann im montierten Zustand von den Klemmelementen und Zentrierelementen des ersten Lamellentyps überdeckt. Optional können an den radial inneren freien Enden der Stützstege auch tangentiale Fortsätze angeformt sein, die beispielsweise mit der tangentialen Erstreckung der Klemmelemente und der Zentrierelemente korrespondieren. Hierbei können beispielsweise nur an jedem zweiten Polbereich tangentiale Fortsätze angeformt sein, die dann insbesondere mit den tangential breiteren Zentrierelementen überlappen, wohingegen an den Klemmelementen die Stützstege stabförmig ohne tangentiale Fortsätze ausgebildet sind.

In einer weiteren Ausführung weist die axiale Abstütz-Struktur einen Stützring auf, der über die radialen Stützstege mit den Polbereichen verbunden ist. Dabei ist der Stützring bevorzugt als geschlossener Ring ausgebildet, wobei dieser entweder mit jedem Polbereich, oder nur mit einzelnen Polbereichen radial verbunden ist. Durch den geschlossenen Stützring wird der zweite Lamellentyp im radial inneren Bereich mechanisch stabilisiert, da dadurch die Polbereiche auch radial innen miteinander verbunden sind.

Dadurch, dass der Stützring des zweiten Lamellentyps im radialen Bereich der Klemmelemente und/oder der Zentrierelemente des ersten Lamellentyps angeordnet ist, ist es nicht notwendig, dass an jedem Polbereich ein radialer Steg zur axialen Abstützung der Klemm- und/oder Zentrierelemente angeordnet ist. Daher ist es beispielsweise ausreichend, dass nur jeder zweite oder dritte oder vierte oder fünfte oder sechste Polbereich über einen radialen Stützsteg mit dem inneren Stützring verbunden ist.

Gemäß einer weiteren Ausführung kann auch jeder Polbereich über einen radialen Stützsteg mit dem Stützring verbunden sein, wodurch alle Polbereiche mechanisch stabilisierend miteinander verbunden sind.

Die Klemmelemente des ersten Lamellentyps weisen bevorzugt zur Rotorwelle hin eine Spitze auf, die sich bei der Montage auf die Rotorwelle in diese eingraben kann. Dadurch wird ein Formschluss geschaffen, der ein Verdrehen der Blechlamellen gegenüber der Rotorwelle verhindert. Zusätzlich sind am ersten Lamellentyp insbesondere auch Zentrierelemente angeformt, die ebene Anlageflächen aufweisen, die in Umfangsrichtung an der Oberfläche der Rotorwelle anliegen. Dabei sind bevorzugt an jedem Zentrierelement zwei ebene Anlageflächen V-förmig zueinander angeordnet, so dass die Rotorwelle gleichzeitig an jeder der beiden Anlageflächen radial anliegt. Die Klemmelemente und die Zentrierelemente sind besonders günstig über einen kreisförmigen Verbindungsbereich miteinander und mit den Polbereichen des ersten Lamellentyps verbunden.

Um die Klemmelemente und/oder Zentrierelemente des ersten Lamellentyps im radial inneren Bereich zuverlässig axial abzustützen, erstrecken sich die radialen Stützstege des zweiten Lamellentyps radial über den kreisförmigen Verbindungsbereich hinaus radial nach innen zur Rotorwelle hin. Dadurch überlappen die radialen Stützstege des zweiten Lamellentyps radial und tangential mit den Zentrierelementen und/oder den Klemmelementen des ersten Lamellentyps.

In einer weiteren Ausgestaltung liegt der kreisförmige Stützring des zweiten Lamellentyps radial näherungsweise im Bereich des ringförmigen Verbindungsbereichs der Klemmelemente des ersten Lamellentyps. Dadurch liegen die beiden Lamellentypen über den gesamten Umfang im radial inneren Bereich axial aneinander an, um sich gegenseitig zuverlässig axial abzustützen. In einer weiteren Ausführung ist der kreisförmige Stützring des zweiten Lamellentyps radial innerhalb des ringförmigen Verbindungsbereichs des ersten Lamellentyps angeordnet und stützt dadurch direkt die Klemmelemente und/oder die Zentrierelemente des ersten Lamellentyps axial ab.

Die einzelnen Blechlamellen sind vorteilhaft axial mittels Stanzpaketierungen miteinander verbunden, bei denen Material einer ersten Blechlamelle in eine entsprechende axiale Ausformung einer benachbarten Blechlamelle plastisch umgeformt wird. Durch die plastische Materialumformung sind die benachbarten Blechlamellen miteinander verspannt, sodass sie in Axialrichtung alle zusammen zu einem gemeinsamen Blechpaket verbunden sind. Daher ist es auch nicht notwendig, dass der zweite Lamellentyp unmittelbar mit der Rotorwelle verbunden sein muss. Ebenso können die Blechlamellen mittels einer Klebeschicht axial miteinander verbunden werden, die gleichzeitig auch eine elektrische Isolierung zwischen den Blechlamellen bilden. Durch die erfindungsgemäße Abstützt-Struktur des zweiten Lamellentyps wird diese axiale Verbindung zwischen den Blechlamellen bei der Montage des Blechpakets deutlich weniger belastet. Dadurch bleiben alle Blechlamellen flächig, parallel zueinander geschichtet auf der Rotorwelle angeordnet.

Bevorzugt werden in die Aufnahmetaschen näherungsweise quaderförmige Dauermagnete in Axialrichtung eingefügt. Die Permanentmagnete sind bevorzugt als speichenförmige Magnete ausgebildet, die eine größere Ausdehnung in Radialrichtung haben, als in Tangentialrichtung. Die Dauermagnete weisen bevorzugt eine Magnetisierung in Tangentialrichtung auf, wobei benachbarte Dauermagnete sich einander abstoßen. Dadurch verlaufen die Magnetfeldlinien der Dauermagnete durch die Polbereiche radial nach außen bis zur Außenkontur des Rotors, derart dass sich in Umfangsrichtung Polkappen mit einem Nordpol mit Polkappen, die einen Südpol aufweisen, abwechseln. Es sind auch Ausführungen möglich, bei denen die Erstreckung der Permanentmagnete in tangentialer Richtung größer ist als in Radialrichtung. Als Dauermagnete werden bevorzugt Seltene-Erden-Magnete verwendet, die insbesondere NdFeB aufweisen.

Um das Rastmoment des Rotors gezielt zu beeinflussen, kann die Außenkontur der einzelnen Polkappen näherungsweise eine Sinusform oder eine sogenannte Richter-Kontur aufweisen. Dadurch weicht der Umfang des Rotors von einem exakten Kreis ab, so dass der Radius des Rotors an den Umfangsbereichen der Dauermagnete beispielsweise geringer ist, als in den Umfangsbereichen der Polbereiche zwischen den Dauermagneten.

Ein solcher erfindungsgemäßer Rotor ist bevorzugt innerhalb eines Stators angeordnet, der Teil einer elektrischen Maschine ist. Die elektrische Maschine ist bevorzugt als elektrisch kommutierter Elektromotor ausgebildet, bei dem der Stator elektronisch kommutierte Wicklungen aufweist, die den Rotor mit den Dauermagneten in Drehbewegung versetzen. Ein solcher EC-Motor wird bevorzugt als elektrische Antriebseinheit eines Zweirads verwendet, kann jedoch auch für andere Verstellantriebe für Komponenten im Kraftfahrzeug oder für rotatorische Drehantriebe verwendet werden. Eine solch elektrische Maschine mit geringem Rastmoment kann auch für Anwendungen außerhalb des Kraftfahrzeugs benutzt werden.

### Kurze Beschreibung der Zeichnungen

Bevorzugte Ausführungsbeispiele der Erfindung sind in der nachfolgenden Beschreibung anhand der beigefügten Zeichnungen, in denen entsprechende Elemente mit übereinstimmenden Bezugszeichen versehen sind, näher erläutert. Es zeigt:
- Fig. 1: eine schematische Ansicht zweier unterschiedlicher Lamellen-Typen nach dem Stand der Technik,
- Fig. 2: eine Schnittdarstellung einer elektrischen Maschine nach dem Stand der Technik, und
- Fig. 3 bis 6: mehrere Ausführungsbeispiele mit verschiedenen Ausführungen des zweiten Lamellentyps.

### Ausführungsformen der Erfindung

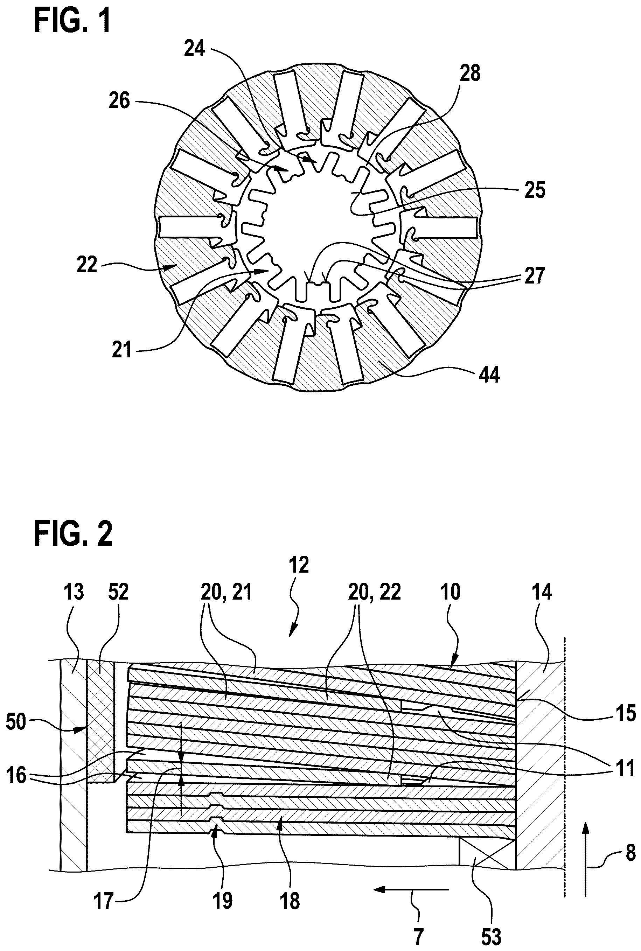

In Fig. 1 sind zwei Blechlamellen 20 dargestellt, wie diese axial zu einem Grundkörper 18 eines Rotors 10 zusammengefügt werden. Dabei weist der Grundkörper 18 einen ersten Lamellentyp 21 auf, der mittels Klemmelementen 24 eine Presspassung mit einer Rotorwelle 14 des Rotors 10 ausbilden kann. Die Klemmelemente 24 weisen an ihrer radialen Innenseite Spitzen 25 auf, die sich beispielsweise in das Material der Rotorwelle 14 eingraben können. Zur korrekten Positionierung des Grundkörpers 18 auf der Rotorwelle 14 weist der erste Lamellentyp 21 zusätzliche Zentrierelemente 26 auf, die hier zwei V-förmig zueinander angeordnete tangentiale Anlageflächen 27 aufweisen. Somit liegt der erste Lamellentyp 21 mit den Klemmelementen 24 und den Zentrierelemente 26 radial an der Rotorwelle 14 an. Der erste Lamellentyp 21 und ein zweiter Lamellentyp 22 weisen beide Magnettaschen 40 auf, in die in Axialrichtung 8 Permanentmagnete 42 eingeschoben werden können. Dabei sind die Magnettaschen 40 des zweiten Lamellentyps 22 radial außen mittels einer Umfangswand 41 geschlossen ausgebildet, und erstrecken sich hier speichenförmig radial nach innen. Am zweiten Lamellentyp 22 sind Fixierelemente 32 angeformt, mittels denen die Permanentmagnete 42 innerhalb der Magnettaschen 40 verspannt werden. Die Fixierelemente 32 sind hierbei als Haltenasen 33 ausgebildet, die an Polbereichen 44 seitlich angeformt sind, die jeweils in Umfangsrichtung 9 zwischen den Magnettaschen 40 ausgebildet sind. Dabei pressen die Fixierelemente 32 die Permanentmagnete 42 radial nach außen gegen die Umfangswand 41 der Magnettaschen 40. Die Fixierelemente 32 sind dabei direkt aus dem Blech des zweiten Lamellentyps 22 ausgestanzt und weisen eine Geometrie auf, durch die die Fixierelemente 32 eine elastische Anpresskraft in Radialrichtung 7 nach außen ausüben können. Beispielsweise sind die Fixierelemente 32 an einer Seite der Polbereiche 44 angeformt und ragen bogenförmig als seitliche Haltenasen 33 in Umfangsrichtung 9 zur Magnettasche 40 hin.

Die einzelnen Blechlamellen 20 werden beispielsweise aus einem Elektroblech ausgestanzt und sind bezüglich der Axialrichtung 8 bevorzugt mittels Stanzpaketierungen 19 miteinander zum Grundkörper 18 verprägt. Hierzu sind bevorzugt Verstemmpunkte ausgebildet, die alle Blechlamellen 20 miteinander verbinden. Alternativ können die Blechlamellen 20 axial miteinander verklebt werden. Der Grundkörper 18 wird mit seiner zentralen Wellenaussparung 15 in Axialrichtung 8 auf die Rotorwelle 14 aufgepresst, wie dies in Fig. 2 dargestellt ist. Der fertige Rotor 10 ist beispielsweise in einem Lager 53 eines Statorgehäuse 13 einer elektrischen Maschine 12 gelagert, wobei insbesondere im Statorgehäuse 13 auch eine Statorwicklung 52 zur elektronischen Kommutierung des Rotors 10 angeordnet ist. Da der zweite Lamellentyp 22 bekannter Rotoren 10 im radial inneren Bereich einen axialen Hohlraum 11 zwischen den benachbarten Lamellentypen 21 erster Art ausbildet, besteht die Gefahr, dass beim axialen Aufpressen des Grundkörpers 18 auf die Rotorwelle 14 die Blechlamellen 20 verkippen und sich axial voneinander lösen. Dabei ergeben sich - wie in Fig. 2 dargestellt - zwischen axial benachbarten Blechlamellen 20 Luftspalte 16, die am radial äußeren Umfang des Rotors 10 die Dimension einer Blechdicke 17 erreichen können.

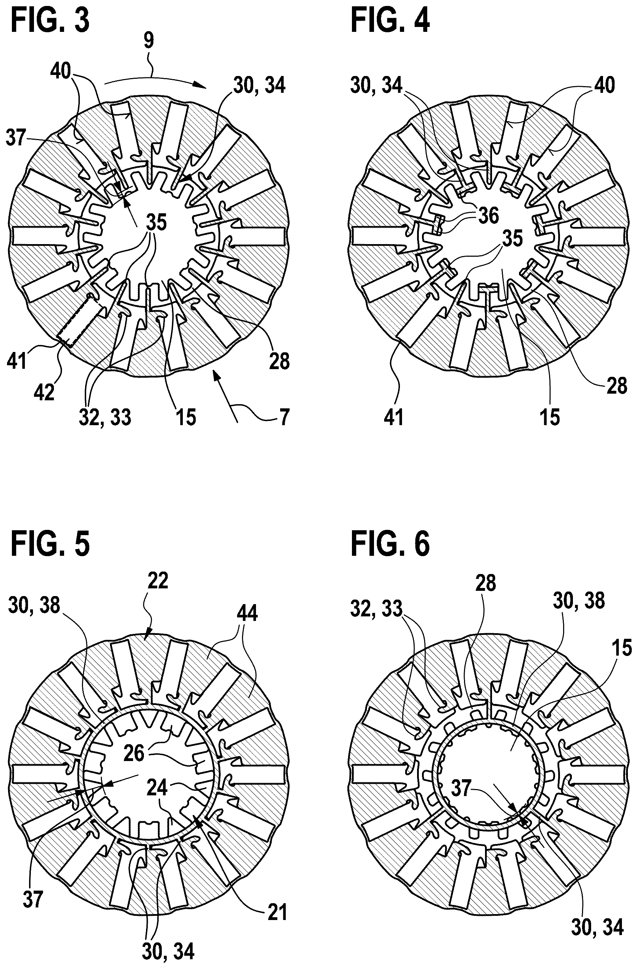

Daher weisen erfindungsgemäß die zweiten Lamellentypen 22 eine axiale Abstütz-Struktur 30 auf, um ein solches Verkippen der Blechlamellen 20 gegeneinander zu verhindern. In den Figuren 3 bis 6 sind unterschiedliche Geometrien einer solchen Abstütz-Struktur 30 dargestellt. In Fig. 3 - 6 ist jeweils ein zweiter Lamellentyp 22 schematisch auf einem darunter liegenden ersten Lamellentyp 21 dargestellt, wobei die beiden Lamellentypen 21, 22 in ihrer axialen Reihenfolge beliebig variiert werden können, wie dies beispielhaft in Fig. 2 dargestellt ist.

In Fig. 3 weist die axiale Abstützung-Struktur 30 Stützstege 34 auf, die sich in Radialrichtung 8 von den Polbereichen 44 radial nach innen zur Rotorwelle 14 hin erstrecken. Dabei ist insbesondere an jedem Polbereich 44 genau ein radialer Stützsteg 34 ausgebildet. Die radialen Stützstege 34 sind dabei axial überlappend mit den Klemmelementen 24 und mit den Zentrierelementen 26 des ersten Lamellentyps 21 angeordnet. Die radialen Stützstege 34 weisen radial innen freie Enden 35 auf, die jedoch einen radialen Abstand 37 zur nicht dargestellten Rotorwelle14 - bzw. insbesondere zur zentralen Wellenaussparung 15 - aufweisen. Die radialen Haltestege 34 sind monolithisch mit den Polbereichen 44 ausgebildet und erstrecken sich vom radialen Bereich, an dem die Fixierelemente 32 angeformt sind, bis zu einem radialen Bereich, bei dem im ersten Lamellentyp 21 ein Verbindungsbereich 28 für die Klemmelemente 24 und die Zentrierelemente 26 ausgebildet ist. Die Klemmelemente 24 weisen beispielsweise eine Spitze 25 auf, die sich beim axialen Aufschieben in die Rotorwelle 14 eingeprägt. In Umfangsrichtung 9 zwischen den Klemmelementen 24 weisen die Zentrierelemente 26 V-förmig ausgebildete Anlageflächen 27 auf, die in montiertem Zustand insbesondere mit beiden Schenkeln flächig am Außenumfang der Rotorwelle14 anliegen. Dadurch wird der Grundkörper 18 exakt in der radialen Ebene auf der Rotorwelle 14 positioniert und mittels der Klemmelemente 24 zuverlässig auf der Rotorwelle 14 fixiert. Die Klemmelemente 24 und Zentrierelemente 26 sind an dem ringförmig ausgebildeten Verbindungsbereich 28 angeformt und erstrecken sich von diesem radial nach innen zur Rotorwelle 14 hin. Die Abstützt-Struktur 30 hat die gleiche Blechdicke 17 des zweiten Lamellentyps 22 wie im Bereich der Polbereiche 44, so dass auch radial innen die beidseitig benachbart anliegenden Blechlamellen 20 in Axialrichtung 8 sich flächig an der Abstützt-Struktur 30 abstützen, und dadurch eine Bildung von Luftspalten 16 zwischen den Blechlamellen 20 im radial äußeren Bereich verhindert wird.

In Fig. 4 ist eine Variante dargestellt, bei der an den freien Enden 35 der Stützstege 34 in Umfangsrichtung 9 tangentiale Fortsätze 36 angeformt sind. Diese können an jedem radialen Stützsteg 34 ausgebildet sein, oder beispielsweise nur an jedem zweiten Stützsteg 34, der hier insbesondere mit den Zentrierelementen 26 des ersten Lamellentyps 21 überlappt, die hier in Umfangsrichtung 9 eine größere Ausdehnung aufweisen als die spitzen Klemmelemente 24. Die tangentialen Fortsätze 36 erstrecken sich bevorzugt von den freien Enden 35 der radialen Stützstegen 34 in beide gegenüberliegende Umfangsrichtungen 9, so dass die Abstützt-Struktur 30 jeweils T-förmig ausgebildet ist.

In einem weiteren Ausführungsbeispiels gemäß Fig. 5 sind die Enden 35 der radialen Stützstege 34 über einen Stützring 38 miteinander verbunden. Bei dieser Ausführung ist an jedem Polbereich 44 ein radialer Stützsteg 34 angeformt, die alle mit dem kreisförmigen Stützring 38 einstückig verbunden sind. Dieser geschlossene Stützring 38 stabilisiert den radial inneren Bereich des zweiten Lamellentyps 22. In Fig. 5 liegt der Stützring 38 näherungsweise radial deckungsgleich zum ringförmigen Verbindungsbereich 28 des ersten Lamellentyps 21, sodass in diesem radialen Bereich die axial benachbarten Blechlamellen über den gesamten Umfang axial aneinander anliegen. Die Klemmelemente 24 und die Zentrierelemente 26 erstrecken sich dann über diesen Stützring 38 hinaus radial nach innen zur Rotorwelle 14 hin.

Fig. 6 zeigt eine weitere Ausführung, bei der beispielsweise nur an jedem vierten oder fünften Polbereich 44 des zweiten Lamellentyps 22 ein radialer Stützsteg 34 angeformt ist. Vorzugsweise sind hierbei alle radialen Stützstege 34 über den kreisförmigen Stützring 38 miteinander verbunden, sodass die axiale Abstützt-Struktur 30 durchgehend über den gesamten Umfang ausgebildet ist, und sich alle Klemmelemente 24 und alle Zentrierelemente 26 axial an dem Stützring 38 abstützen können. Alternativ zur Ausführung in Fig. 5 ist in Fig. 6 der Stützring 38 radial innerhalb des Verbindungsbereichs 28 des ersten Lamellentyps 21 angeordnet. Dadurch überdeckt der Stützring 38 nicht den Verbindungsbereich 28, sondern überlappt direkt mit den Klemmelementen 24 und den Zentrierelementen 26 des ersten Lamellentyps 21. In weiteren nicht dargestellten Varianten kann der radiale Stützsteg 34 beispielsweise auch nur an jedem zweiten oder jedem dritten oder jedem sechsten Polbereich 44 angeformt werden.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise die konkrete Lage und die Ausbildung der Klemmelemente 24 und der Zentrierelemente 26 den Anforderungen der elektrischen Maschine 12 und den Fertigungsmöglichkeiten angepasst werden. Ebenso kann die konkrete Ausbildung, die Anordnung und Anzahl der Magnettaschen 40 sowie der korrespondierenden Polbereiche 44 und der Fixierelemente 32 für die Permanentmagnete 42 variiert werden. Die konkrete Geometrie der Abstützt-Struktur 30 kann ebenfalls entsprechend variiert werden, insbesondere die Varianten der unterschiedlichen Ausführungsbeispiele miteinander kombiniert werden. Die Erfindung eignet sich in besonderer Weise für den Drehantrieb von Komponenten oder die Verstellung von Teilen im Kraftfahrzeug, kann jedoch auch für andere Anwendungen, wie den Antrieb von Fahrrädern oder Motorrollern verwendet werden. Die elektrische Maschine 12 ist bevorzugt als elektronisch kommutierter EC-Motor ausgebildet.

## Patentansprüche

1. Rotor (10) für eine elektrische Maschine (12), mit einem Grundkörper (18), der sich konzentrisch um eine axiale Rotorwelle (14) erstreckt, wobei der Grundkörper (18) aus unterschiedlichen, axial gestapelten Blechlamellen (20) zusammensetzt ist, wobei ein erster Lamellen-Typ (21) an seiner radialen Innenseite Klemmelemente und/oder Zentrierelemente zur Befestigung auf der Rotorwelle (14) aufweist, und ein zweiter Lamellen-Typ (22) radial innen eine axiale Abstütz-Struktur aufweist, die radial beabstandet zur Rotorwelle (14) ausgebildet ist und axial zwischen ersten Lamellen-Typen (21) angeordnet ist, um diese im radial inneren Bereich in Axialrichtung (8) gegeneinander abzustützen.

2. Rotor (10) nach Anspruch 1, **dadurch gekennzeichnet, dass** die Blechlamellen (20) Magnettaschen (40) zur Aufnahme von Permanentmagneten (42) aufweisen, wobei am zweiten Lamellen-Typ (22) einstückig Fixier-Elemente (32) zur Befestigung der Permanentmagnete (42) ausgebildet sind.

3. Rotor (10) nach einem der vorherigen Ansprüche, **dadurch gekennzeichnet, dass** die Magnettaschen (40) des zweiten Lamellen-Typs (22) radial außen geschlossen ausgebildet sind, und sich radial nach innen erstrecken, wobei an radialen Innenseiten der Magnettaschen (40) die Fixierelemente (32) - insbesondere als seitlich abstehende Haltenasen (33) - angeordnet sind, die die Permanentmagnete (42) radial federnd nach außen in die Magnettaschen (40) drücken.

4. Rotor (10) nach einem der vorherigen Ansprüche, **dadurch gekennzeichnet, dass** in Umfangsrichtung (9) zwischen den Magnettaschen (40) Polbereiche (44) ausgebildet sind, und bei den zweiten Lamellen-Typen (22) als Abstütz-Struktur (30) sich radiale Stütz-Stege (34) von den Polbereichen (44) in Radialrichtung (7) nach innen erstrecken.

5. Rotor (10) nach einem der vorherigen Ansprüche, **dadurch gekennzeichnet, dass** die radialen Stütz-Stege (34) radial innen freie Enden (35) aufweisen, an denen insbesondere Fortsätze (36) in Umfangsrichtung (9) ausgeformt sind.

6. Rotor (10) nach einem der vorherigen Ansprüche, **dadurch gekennzeichnet, dass** die radialen Stütz-Stege (34) an ihren radial inneren Enden in Umfangsrichtung (9) miteinander verbunden sind - insbesondere durch einen in Umfangsrichtung (9) ununterbrochenen kreisförmigen Stützring (38).

7. Rotor (10) nach einem der vorherigen Ansprüche, **dadurch gekennzeichnet, dass** nur an jedem zweiten oder dritten oder vierten oder fünften oder sechsten Polbereich (44) der zweiten Lamellen-Typen (22) ein radialer Stütz-Steg (34) ausgebildet ist.

8. Rotor (10) nach einem der vorherigen Ansprüche, **dadurch gekennzeichnet, dass** alle radialen Stütz-Stege (34) mit dem kreisförmigen Stützring (38) verbunden sind.

9. Rotor (10) nach einem der vorherigen Ansprüche, **dadurch gekennzeichnet, dass** die Klemmelemente (24) zur Rotorwelle (14) hin spitzig, und die Zentrierelemente (26) V-förmig ausgebildet sind und mittels eines ringförmigen Verbindungsbereichs (28) des ersten Lamellen-Typs (21) miteinander verbunden sind, und sich die Zentrierelemente (26) und die Klemmelemente (24) vom Verbindungsbereich (28) radial nach innen zur Rotorwelle (14) hin erstrecken.

10. Rotor (10) nach einem der vorherigen Ansprüche, **dadurch gekennzeichnet, dass** sich die radialen Stütz-Stege (34) des zweiten Lamellen-Typs (22) radial nach innen über den ringförmigen Verbindungsbereich (28) des ersten Lamellen-Typs (21) hinaus erstrecken.

11. Rotor (10) nach einem der vorherigen Ansprüche, **dadurch gekennzeichnet, dass** der kreisförmige Stützring (38) des zweiten Lamellen-Typs (22) etwa deckungsgleich mit dem ringförmigen Verbindungsbereich (28) des ersten Lamellen-Typs (21) angeordnet ist.

12. Rotor (10) nach einem der vorherigen Ansprüche, **dadurch gekennzeichnet, dass** die Blechlamellen (20) mittels Stanzpaketieren oder mittels Kleben axial miteinander verbunden sind.

13. Rotor (10) nach einem der vorherigen Ansprüche, **dadurch gekennzeichnet, dass** die Abmessung der Permanentmagnete (42) in Radialrichtung (7) größer ist als in Umfangsrichtung (9), wobei vorzugsweise die Permanentmagnete (42) in Umfangsrichtung (9) magnetisiert sind.

14. Elektrische Maschine (12), insbesondere Elektromotor, wobei der Rotor (10) nach einem der vorherigen Ansprüche radial innerhalb eines Stators (50) angeordnet ist, der eine elektronisch kommutierte elektrische Wicklung (52) aufweist.
